# EUROPÄISCHE PATENTSCHRIFT

(11) **EP 1 241 082 B1**
(45) Veröffentlichungstag und Bekanntmachung des Hinweises auf die Patenterteilung: **26.09.2007**
(21) Anmeldenummer: 02004469.9
(22) Anmeldetag: 27.02.2002
(51) Int. Cl.: B62D 25/10

(54) **Kraftfahrzeug mit wenigstens einer klappbaren Haube, insbesondere Motorraum- und/oder Gepäckraumdeckel**
Motor vehicle with at least a pivotable bonnet, especially for engine or luggage compartment
Véhicule automobile avec au moins un capot , spécialement pour compartiment moteur ou bagages

(30) Priorität: 16.03.2001 DE 10112657
(43) Veröffentlichungstag der Anmeldung: 18.09.2002
(73) Patentinhaber: Bayerische Motoren Werke Aktiengesellschaft, 80809 München (DE)
(72) Erfinder: Ulrich, Josef, 86570 Inchenhofen (DE)

(56) Entgegenhaltungen:
- EP-A- 0 776 778
- WO-A-00/35612
- DE-A- 2 548 398
- US-A- 5 540 016
- US-A- 5 988 305
- PATENT ABSTRACTS OF JAPAN vol. 009, no. 282 (M-428), 9. November 1985 (1985-11-09) & JP 60 124575 A (NISSAN JIDOSHA KK), 3. Juli 1985 (1985-07-03)

## Beschreibung

Die Erfindung bezieht sich auf ein Kraftfahrzeug der im Oberbegriff des Patentanspruchs 1 genannten und aus der JP-A-60124575 hervorgehenden Art.

Dieser bekannte Motorraumdeckel eines Personenkraftwagens hat innenseitig ein aus Blech bestehendes Verstärkungsteil, das an der Unterseite eine oder mehrere Sollknickstellen aufweist. Diese bestehen aus trapezförmigen Sicken, welche in einer Fahrzeugquerebene verlaufen. Der Motorraumdeckel wird bei einem Frontalcrash definiert nach oben ausgewölbt. Im Automobilbau wird heute jedoch oftmals ein sprödes Material, wie glasfaserverstärkter Kunststoff, Leichtmetall oder dergleichen, verwendet, wobei ein aus diesem Werkstoff bestehendes Verstärkungsteil bei bekannter Anordnung der Sicken im Falle eines Fahrzeugcrashs sich nicht zuverlässig nach oben auswölben kann.

Aufgabe der Erfindung ist es daher, bei einer klappbaren Haube der im Oberbegriff des Patentanspruchs 1 genannten Art die Sollknickstelle derart anzuordnen, dass die klappbare Haube bei einem Fahrzeugcrash auch dann zuverlässig nach oben ausknickt, wenn das Verstärkungsteil aus einem alternativen Werkstoff besteht.

Zur Lösung der Aufgabe sind die im Patentanspruch 1 dargelegten Merkmale vorgesehen.

Da die Sollknickstelle erfindungsgemäß im Bereich der Oberseite des aus Kunststoff oder Leichtmetall bestehenden Verstärkungsteils vorgesehen ist, kann sich dieses bei einem Front- oder Heckaufprall vorteilhafterweise ungehindert nach oben durchbiegen und damit definiert im Bereich der Sollknickstelle ganz durchbrechen, wobei das Verstärkungsteil beispielsweise auch aus einem glasfaserverstärkten Kunststoff oder dergleichen spröden Material bestehen kann. Dabei kann die Sollknickstelle auch aus einem bloßen Einschnitt bestehen oder auch als eine Einkerbung ausgebildet sein, die einen nach außen offenen spitzen Winkel einschließt. Zweckmäßigerweise beträgt hierbei die Tiefe der Einkerbung mindestens etwa ein Drittel der Dicke des Verstärkungsteils, so dass dieses bei einem Fahrzeugcrash zuverlässig nach oben ausknicken kann (Merkmale der Patentansprüche 1 bis 3).

Wenn gemäß den Merkmalen des Patentanspruchs 4 an der Oberseite des Verstärkungsteils mindestens vier, jeweils in Fahrzeuglängsrichtung im Abstand voneinander angeordnete Einkerbungen ausgebildet sind, so ist bei einem Fahrzeugcrash ein absolut zuverlässiges Ausknicken des Verstärkungsteils gewährleistet, zumal hierbei eine von der Oberseite des Verstärkungsteils zurückgesetzte Abstufung vorgesehen ist, welche sich jeweils zwischen zwei Einkerbungen erstreckt. Dabei beträgt zweckmäßigerweise die Tiefe der Abstufung mindestens etwa die Hälfte der Dicke des Verstärkungsteils, wobei an den beiden gegenüberliegenden Eckbereichen des Grundes der Abstufung jeweils eine Einkerbung vorgesehen ist. Zweckmäßigerweise kann sowohl die Abstufung als auch die Einkerbungen bei Herstellung des Verstärkungsteils durch bloße Formgebung, also in einfacher und kostengünstiger Weise, erzeugt werden.

Damit beim erwähnten Ausknicken des Verstärkungsteils auch die über diesem liegende Außenwandung der klappbaren Haube gezielt nach oben durchgebogen wird, ist nach einer weiteren Ausgestaltung der Erfindung an der Oberseite des Verstärkungsteils ein (oder auch zwei) spitzwinkliger Fortsatz vorgesehen, der sich über den größten Teil der Breite der klappbaren Haube erstreckt und dabei bis nahe zu deren Außenwandung verläuft. Dabei erstreckt sich die innen liegende Flanke des spitzwinkligen Fortsatzes bis zum Grund der Einkerbung. Der spitzwinklige Fortsatz gewährleistet eine zuverlässige punktuelle Krafteinleitung in die Außenwandung, so dass an dieser auf eine Einfräsung oder dergleichen verzichetet werden kann. Dabei kann der spitzwinklige Fortsatz einstückig am Verstärkungsteil ausgebildet sein, also aus dessen jeweiligem Material bestehen oder auch aus einem Stahlteil gefertigt sein, das formschlüssig, beispielsweise durch einen Schwalbenschwanz, in das Verstärkungsteil eingebettet ist. Falls nur ein einziger spitzwinkliger Fortsatz vorgesehen ist, so wird dieser zweckmäßigerweise im Bereich der dem freien Ende der klappbaren Haube benachbarten Einkerbung vorgesehen. (Merkmale der Patentansprüche 5 bis 8).

Ein Ausführungsbeispiel der Erfindung ist in der Zeichnung dargestellt und wird im Folgenden erläutert. Es zeigt:
- Figur 1: eine perspektivische Darstellung des Heckbereichs eines Personenkraftwagens, dessen Gepäckraumdeckel mit zwei Abstufungen und jeweils mit zwei Sollknickstellen versehen ist,
- Figur 2: einen Schnitt längs der Linie II-II in Figur 1 mit nur einer Abstufung in größerer Darstellung.

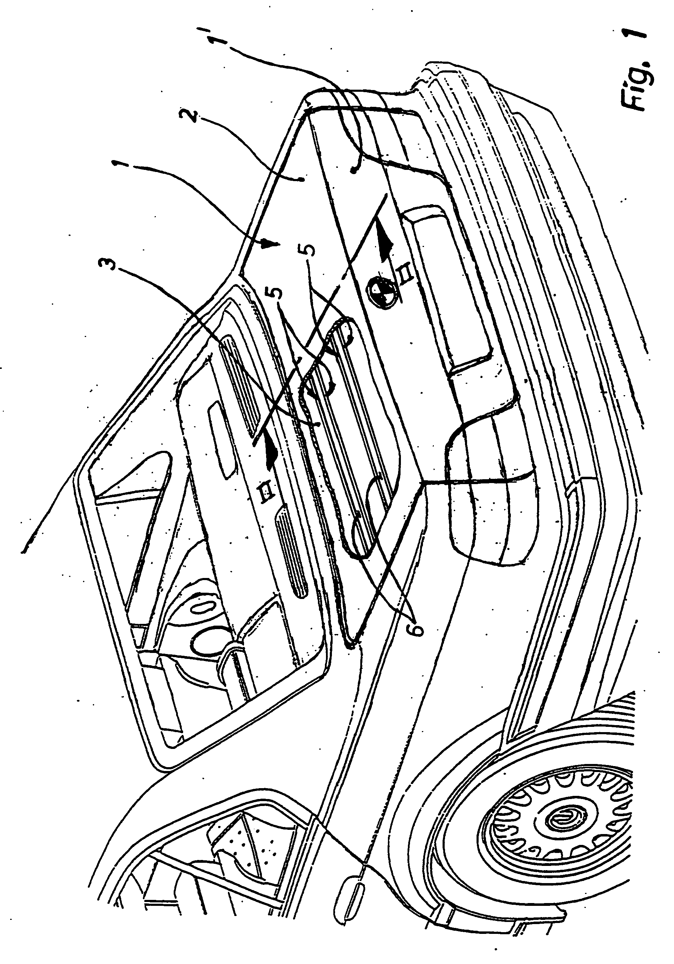

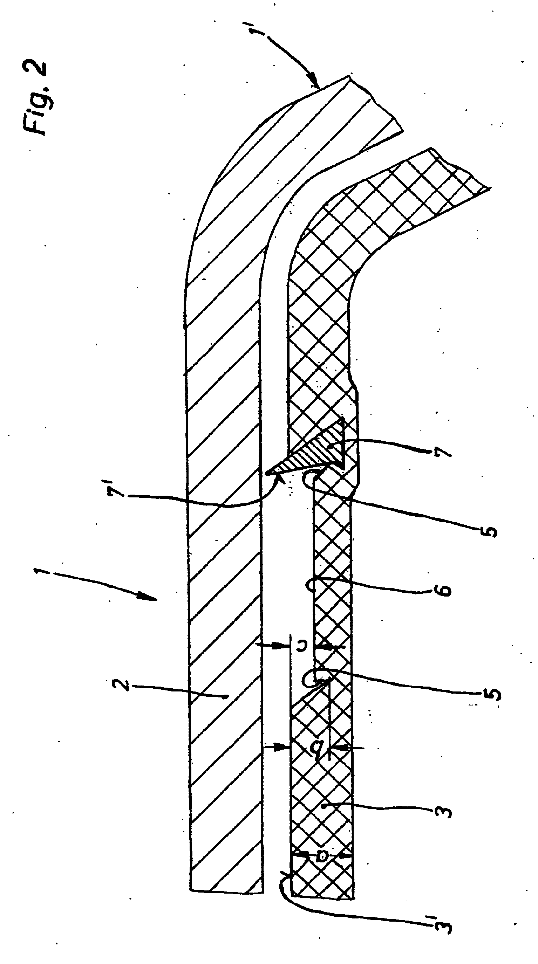

Der in den Figuren 1 und 2 dargestellte, am Fahrzeugaufbau angelenkte und in der dargestellten Schließlage den Gepäckraum überdeckende Gepäckraumdeckel 1 besteht im Wesentlichen aus einer aus Stahlblech gefertigten Außenwandung 2 und einem sich an deren Innenseite befindenden Verstärkungsteil 3, das aus Kunststoff besteht und an mehreren Umfangsrändern mit der Außenwandung 2 verbunden ist.

Wie in Figur 2 ersichtlich, sind im Verstärkungsteil 3 vier, jeweils in einer Fahrzeugquerebene verlaufende Einkerbungen 5 ausgebildet, die jeweils von der Oberseite 3' des Verstärkungsteils zurückgesetzt sind und dabei einen zu dieser hin offenen spitzen Winkel einschließen; dabei ist die Oberseite 3' des Verstärkungsteils 3 der Außenwandung 2 zugewandt. Die Tiefe b der Einkerbung 5 beträgt von der Oberseite 3' des Verstärkungsteils 3 bis zu ihrem Grund etwa die Hälfte der Dicke a des Verstärkungsteils 3, mindestens jedoch etwa ein Drittel von dessen Dicke a.

In Figur 1 ist zu ersehen, dass das Verstärkungsteil 3 ferner mit zwei, in etwa parallelem Abstand voneinander angeordneten Abstufungen 6 versehen ist, die jeweils von der Oberseite 3' des Verstärkungsteils 3 zurückgesetzt sind, wobei die Tiefe G der Abstufung 6 etwa die Hälfte der Dicke a des Verstärkungsteils 3 beträgt. Von den beiden Abstufungen 6 ist in Figur 2 nur eine einzige dargestellt, wobei ersichtlich ist, dass an den beiden gegenüberliegenden Eckbereichen der Abstufung 6 jeweils eine zur Oberseite 3' des Verstärkungsteils 3 hin offene Einkerbung 5 ausgebildet ist. Dabei ist die der Rückwand 1' des Gepäckraumdeckels 1 benachbart liegende Einkerbung 5 von einem in das Verstärkungsteil 3 eingesetzten, spitzwinkligen Fortsatz 7 begrenzt, der sich nahezu über die ganze Breite des Gepäckraumdeckels 1 erstreckt. Ferner steht der spitzwinklige Fortsatz 7 so weit vom Verstärkungsteil 3 ab, dass er nahe bis zur Innenseite der Außenwandung 2 verläuft. Darüber hinaus verläuft die innenliegende Flanke 7' des spitzwinkligen Fortsatzes 7 bis zum Grund der Einkerbung 5. Im dargestellten Ausführungsbeispiel besteht der spitzwinklige Fortsatz 7 aus einem Stahlteil, das bei Fertigung des Verstärkungsteils 3 in dieses über einen Schwalbenschwanz eingesetzt ist. Der aus einem Stahlteil bestehende spitzwinklige Fortsatz 7 erzeugt bei einem Fahrzeugcrash eine punktuelle Krafteinleitung in die zugewandte Außenwandung 2, so dass in dieser keine Einfräsung oder dergleichen vorgesehen werden muss. An Stelle des aus einem Stahlteil bestehenden spitzwinkligen Fortsatz 7 kann dieser auch einstückig am Verstärkungsteil 3 ausgebildet werden und aus dessen jeweiligem Material bestehen.

## Patentansprüche

1. Kraftfahrzeug mit wenigstens einer klappbaren Haube, insbesondere Motorraum- und/oder Gepäckraumdeckel (1), im Wesentlichen bestehend aus einer Außenwandung (2) und einem sich an deren Innenseite befindenden aus einem spröden Werkstoff bestehenden Verstärkungsteil (3), das mindestens eine, zumindest angenähert in einer Fahrzeugquerebene verlaufende Sollknickstelle aufweist, **dadurch gekennzeichnet, dass** die Sollknickstelle als eine Einkerbung (5) ausgebildet ist und im Bereich der der Außenwandung (2) zugewandten Oberseite (3') des Verstärkungsteils (3) vorgesehen ist.

2. Kraftfahrzeug nach Anspruch 1, **dadurch gekennzeichnet, dass** die Einkerbung (5) einen zur Oberseite (3') des Verstärkungsteils (3) hin offenen spitzen Winkel einschließt.

3. Kraftfahrzeug nach Anspruch 2, **dadurch gekennzeichnet, dass** die Tiefe (b) der Einkerbung (5) mindestens etwa ein Drittel der Dicke (a) des Verstärkungsteils (3) beträgt.

4. Kraftfahrzeug nach einem der Ansprüche 1 bis 3, **dadurch gekennzeichnet, dass** am Verstärkungsteil (3) mindestens vier, in Fahrzeuglängsrichtung jeweils im Abstand voneinander angeordnete Einkerbungen (5) vorgesehen sind, wobei zwischen jeweils zwei Einkerbungen eine von der Oberseite (3') des Verstärkungsteils zurückgesetzte Abstufung (6) ausgebildet ist, deren Tiefe (c) etwa die Hälfte der Dicke (a) des Verstärkungsteils beträgt, und dabei die beiden Einkerbungen (5) an den Eckbereichen der Abstufung liegen.

5. Kraftfahrzeug nach einem der Ansprüche 1 bis 4, **dadurch gekennzeichnet, dass** vom Verstärkungsteil (3) zumindest ein, sich mindestens teilweise über die Breite der klappbaren Haube (Gepäckraumdeckel 1) erstreckender, spitzwinkliger Fortsatz (7) absteht, der bis nahe zur Außenwandung (2) der klappbaren Haube verläuft.

6. Kraftfahrzeug nach Anspruch 5, **dadurch gekennzeichnet, dass** sich die innenliegende Flanke (7') des spitzwinkligen Fortsatzes (7) bis zum Grund der Einkerbung (5) erstreckt.

7. Kraftfahrzeug nach Anspruch 5 oder 6, **dadurch gekennzeichnet, dass** bei nur einem einzigen vorhandenen spitzwinkligen Fortsatz (7) dieser im Bereich der dem freien Ende der klappbaren Haube (Rückwand 1' des Gepäckraumdeckels 1) benachbarten Einkerbung (5) liegt.

8. Kraftfahrzeug nach einem der Ansprüche 5 bis 7, **dadurch gekennzeichnet, dass** der spitzwinklige Fortsatz (7) aus einem in das Verstärkungsteil (3) eingesetzten Stahlteil besteht.

## Claims

1. A motor vehicle with at least one foldable hood, especially a cover (1) on an engine space and/or luggage space, comprising an outer wall (2) and an inner reinforcing part (3) made of a brittle material and having at least one set buckling place extending at least approximately in a transverse plane of the vehicle, **characterised in that** the said buckling place is a notch (5) and is situated near the top surface (3'), facing the outer wall (2), of the reinforcing part (3).

2. A vehicle according to claim 1, **characterised in that** the notch (5) encloses an acute angle which opens towards the top surface (3') of the reinforcing part (3).

3. A vehicle according to claim 2, **characterised in that** the depth (b) of the notch (5) is at least approximately a third of the thickness (a) of the reinforcing part (3).

4. A vehicle according to any of claims 1 to 3, **characterised in that** at least four notches (5) spaced apart in the longitudinal direction of the vehicle are formed on the reinforcing part (3), and a step (6) offset from the top surface (3') of the reinforcing part is formed between each two notches and its depth (c) is about half the thickness (a) of the reinforcing part, the two notches (5) lying at the corner regions of the recess.

5. A vehicle according to any of claims 1 to 4, **characterised in that** at least one acute-angled prolongation (7) extends over at least part of the width of the foldable hood (luggage-space cover 1) and reaches almost up to the outer wall (2) of the foldable hood.

6. A vehicle according to claim 5, **characterised in that** the inner flank (7') of the acute-angled prolongation (7) reaches to the bottom of the notch (5).

7. A vehicle according to claim 5 or claim 6, **characterised in that** when there is only one acute-angled prolongation (7), it lies near the notch (5) adjoining the free end of the foldable hood (the back wall 1' of the luggage-space cover 1).

8. A vehicle according to any of claims 5 to 7, **characterised in that** the acute-angled prolongation (7) is a steel part inserted into the reinforcing part (3).

## Revendications

1. Véhicule comportant au moins un capot, notamment un capot de compartiment moteur ou/et un couvercle de coffre à bagages (1), composé principalement d'une paroi extérieure (2) et d'une pièce de renforcement (3) en une matière cassante, prévue son côté intérieur, cette pièce ayant au moins une zone de pliage de consigne passant au moins approximativement dans le plan transversal du véhicule,
**caractérisé en ce que**
la zone de pliage de consigne réalisée sous la forme d'une entaille (5) est prévue au niveau du côté supérieur (3') tourné vers la paroi extérieure (2) de la pièce de renforcement (3).

2. Véhicule automobile selon la revendication 1,
**caractérisé en ce que**
l'entaille (5) forme un angle aigu ouvert vers la face supérieure (3') de la pièce de renforcement (3).

3. Véhicule automobile selon la revendication 2,
**caractérisé en ce que**
la profondeur (b) de l'entaille (5) correspond au moins sensiblement à un tiers de l'épaisseur (a) de la pièce de renforcement (3).

4. Véhicule automobile selon l'une des revendications 1 à 3,
**caractérisé en ce que**
la pièce de renforcement (3) comporte au moins quatre entailles (5) écartées l'une de l'autre dans la direction longitudinale du véhicule, et entre chaque fois deux entailles on a une partie étagée (6) en retrait par rapport à la face supérieure (3') de la pièce de renforcement, et dont la profondeur (c) correspond sensiblement à la moitié de l'épaisseur (a) de la pièce de renforcement et ainsi les deux entailles (5) se situent au niveau des coins de la partie étagée.

5. Véhicule selon l'une quelconque des revendications 1 à 4,
**caractérisé en ce que**
partant de la pièce de renforcement (3), au moins un prolongement (7) à angle aigu, qui s'étend au moins en partie sur la largeur du capot (couvercle de coffre à bagages (1) arrive jusqu'à proximité de la paroi extérieure (2) du capot.

6. Véhicule selon la revendication 5,
**caractérisé en ce que**
le flanc intérieur (7') du prolongement à angle aigu (7) arrive jusqu'au fond de l'entaille (5).

7. Véhicule selon l'une des revendications 5 ou 6,
**caractérisé en ce que**
dans le cas d'un unique prolongement (7) à angle aigu, celui-ci se situe au niveau de l'entaille (5) voisine de l'extrémité libre du capot (paroi arrière (1') du couvercle de coffre à bagages 1).

8. Véhicule selon l'une des revendications 5 à 7,
**caractérisé en ce que**
le prolongement (7) à angle aigu est réalisé en une pièce en acier intégrée dans la pièce de renforcement (3).
